**Europäisches Patentamt**

**European Patent Office**

**Office européen des brevets**

(19)

(11) Veröffentlichungsnummer: **0 210 328**
**B1**

(12) **EUROPÄISCHE PATENTSCHRIFT**

(45) Veröffentlichungstag der Patentschrift:
**15.03.89**

(21) Anmeldenummer: **86103323.1**

(22) Anmeldetag: **12.03.86**

(51) Int. Cl.⁴: **F04F 11/02, F02B 33/42**

(54) Druckwellenlader für einen Verbrennungsmotor mit einer Einrichtung zur Steuerung des Hochdruckabgasstromes.

(30) Priorität: **30.04.85 CH 1831/85**

(43) Veröffentlichungstag der Anmeldung:
**04.02.87 Patentblatt 87/6**

(45) Bekanntmachung des Hinweises auf die Patenterteilung:
**15.03.89 Patentblatt 89/11**

(84) Benannte Vertragsstaaten:
**CH DE FR GB IT LI**

(56) Entgegenhaltungen:
**EP-A- 0 075 360**
**EP-A- 0 080 741**

(73) Patentinhaber: **BBC Brown Boveri AG, Haselstrasse,
CH-5401 Baden(CH)**

(72) Erfinder: **Altmann, Karel, Schulstrasse 11,
CH-5415 Nussbaumen(CH)**
Erfinder: **Mayer, Andreas, Fohrhölzlistrasse 14b,
CH-5443 Niederrohrdorf(CH)**
Erfinder: **Perevuznik, Josef, Ahornstrasse 17,
CH-5442 Fislisbach(CH)**

ACTORUM AG

## Beschreibung

Die vorliegende Erfindung betrifft einen Druckwellenlader für einen Verbrennungsmotor mit einer Einrichtung zur Steuerung des Hochdruckabgasstromes nach dem Oberbegriff des Patentanspruchs 1.

Bei konventionellen Druckwellenladern für Verbrennungsmotoren ist im Gasgehäuse zwischen jedem Hochdruckabgaskanal und Niederdruckabgaskanal eine sogenannte Gastasche vorgesehen, in die ein Teil des aus dem Motor ausgestossenen Hochdruckabgasstromes hinein abgezweigt wird, um im Zusammenwirken mit einer im Luftgehäuse vorgesehenen, sogenannten Expansionstasche die Niederdruckspülung, d.h., das Ausspülen des entspannten Abgases aus den Zellen des Rotors, zu verbessern. Eine gute Niederdruckspülung hat eine verminderte Abgasrezirkulation zur Folge, d.h., das Eindringen von Abgas in die Verbrennungsluft wird reduziert. Eine grosse Abgasrezirkulation im Leerlaufbereich würde den gleichmässigen Lauf des Motors beeinträchtigen.

Das Abzweigen von Hochdruckabgas in die Gastasche vermindert aber andererseits die für die Verdichtung der Ladeluft verfügbare Energie. Es gibt bei Vollast einen breiten Drehzahl- und Temperaturbereich, in dem diese Energie erwünscht wäre, um die Motorleistung zu steigern. Man könnte diese Energie in diesem Betriebsbereich ausnützen, wenn dort die Zufuhr von Hochdruckabgas in die Gastasche unterbunden wäre, da bei Vollast die Niederdruckspülung auf jeden Fall gewährleistet ist. Die Gastasche ist für diesen Betriebszustand also überflüssig.

Eine solche Gastasche mit unveränderbarem Zuströmquerschnitt stellt demnach einen Kompromiss dar, mit dem man in Kauf nimmt, dass die Energie der Hochdruckabgase nicht über den ganzen Betriebsbereich des Motors bestmöglich zur Verdichtung der Ladeluft ausgenützt wird. Durch Schliessen des Gastaschenzuflusses im unteren Vollastbereich lässt sich demgegenüber eine bessere Anpassung der Ladeluftlieferung des Druckwellenladers an den Luftbedarf des Motors erzielen.

Die vorliegende Erfindung entstand aus der Aufgabe, im Sinne der vorstehenden Ausführungen auf verhältnismässig einfache Art eine variable, dem jeweiligen Leistungsbereich des Motors angepasste Aufteilung des aus dem Motor kommenden Hochdruckabgasstromes in einen Hauptstrom durch den Hochdruckabgaskanal und in einen in die Gastasche abzuzweigenden Anteil zu erreichen.

Für die Speisung der Gastasche kennt man zwei Möglichkeiten: Die einfachere besteht in einem schmalen Verbindungskanal zwischen dem Hochdruckabgaskanal und der Gastasche an der dem Rotor zugewandten Stirnseite des Gasgehäuses. In diesem Falle herrscht in der Gastasche der im Hauptstrom vorhandene statische Druck und diese Speisung wird daher statische Anspeisung der Gastasche genannt. Die zweite Möglichkeit ist die sogenannte Totaldruckanspeisung, bei der aus dem Hochdruckabgaskanal vor dessen Einmündung in den Rotorraum ein Gastaschenkanal in die Gastasche hinein abzweigt. Dabei liegt der Gastaschenkanal derart, dass der abgezweigte Gasstrom gegenüber der Richtung des Hauptstromes nur geringfügig abgelenkt wird und in der Gastasche folglich neben dem statischen Druck auch der Staudruck aus der Gasgeschwindigkeit zur Wirkung kommt. Bei einer aus der EP-PS 0 039 375 bekannten Einrichtung dieser Art mit Totaldruckanspeisung wird die Steuerung des Gastaschenzuflusses und damit der Aufteilung des Hochdruckabgasstromes durch eine Bimetallklappe zu erreichen versucht. Diese ist am Anfang des Gastaschenzuflusskanals mit einem Ende im Gasgehäuse eingespannt und gibt bei Raumtemperatur den Gastaschenzufluss völlig frei. Im Betrieb krümmt sich die Bimetallklappe in Abhängigkeit von der Abgastemperatur derart, dass der Gastaschenzufluss zwecks guter Niederdruckspülung zunächst mit steigender Temperatur nur wenig verringert, mit weiter zunehmender Temperatur der Abgase der Zuflussquerschnitt allmählich kleiner und schliesslich im oberen Lastbereich voll geschlossen wird, um möglichst viel Abgasenergie für die Verdichtung der Ladeluft zur Verfügung zu haben.

Diese Einrichtung erlaubt aber keine ideale Steuerung der Klappenstellung, wie sie der Motor in Abhängigkeit vom jeweiligen Betriebszustand erfordern würde, da das Verhalten des Klappenmetalls sich nicht zuverlässig auf die jeweilige Temperatur abstimmen lässt und auch nach längerer Betriebszeit Gefügeveränderungen erfahren könnte, welche die Krümmung als Funktion der Temperatur verändert. Ein weiterer Fehler liegt im verzögerten Ansprechen der Klappenverformung auf Temperaturänderungen, was ebenfalls die gewünschte Zuordnung zwischen Klappenverstellung und Betriebszustand verhindert. Insbesondere ist es aber mit einer solchen Einrichtung auch nicht möglich, die Klappenstellung ladedruckabhängig durch ein in einem Mikroprozessor gespeichertes Kennfeld zu steuern. Nur eine solche Steuerung aber erlaubt eine optimale Anpassung des Gastaschenzuflusses an den jeweiligen Betriebszustand des Motors.

Die vorliegende Erfindung entstand aus dem Bedürfnis nach einer solchen, vorzugsweise kennfeldgesteuerten Einrichtung zur Anpassung der Totaldruckanspeisung an den Betriebszustand des Motors. Eine solche Steuerungseinrichtung soll dafür sorgen, dass der Ladeluftstrom des Druckwellenladers über den ganzen Betriebsbereich des Motors möglichst gut dem Maximum angenähert ist.

Neben der erwähnten steuerbaren Aufteilung des Hochdruckabgasstromes in einen Hauptstrom zur Verdichtung der Ladeluft und in einen Gastaschenzufluss zur Verbesserung der Niederdruckspülung stellt sich die Erfindung aber auch die Aufgabe, mit einer speziellen Ausgestaltung eine Änderung des Rezirkulationsgrades, d.h., des in die Ladeluft eindringenden Abgasanteils, zu ermöglichen, um die Einhaltung eventueller gesetzlich festgelegter Stickoxidgrenzwerte zu gewährleisten.

Bei entsprechender Bemessung und Steuerung des Gastaschenzuflusses ist es bei einer speziellen Variante auch möglich, den Höchstladedruck bzw. das maximale Druckverhältnis auf den zulässigen Höchstwert abzubauen, so dass sich ein separates Wastegate, d.i. das Abblaseventil für zu hohen Ladedruck, erübrigt.

Die Erfindung wird im folgenden anhand der in den Zeichnungen dargestellten Ausführungsbeispiele näher beschrieben.

In den Zeichnungen stellen dar:

Fig. 1 schematisch einen abgewickelten zylindrischen Schnitt durch die Zellen eines Rotors und durch das Gas- und das Luftgehäuse eines Druckwellenladers zwecks Festlegung der in der Beschreibung verwendeten Bezeichnungen, die

Fig. 2 und 3 ein Gasgehäuse im Aufriss bzw. einen Seitenriss desselben im Schnitt, mit einer Einrichtung zur Steuerung des Gastaschenzuflusses, die

Fig. 4 einen Drehschieber als Teil der Einrichtung nach den Fig. 2 und 3, die

Fig. 5 bis 8 im Schnitt die Steuerkanäle zweier verschiedener Ausführungen von Drehschiebern, die

Fig. 9 eine Betätigungseinrichtung für den Drehschieber, die

Fig. 10 bis 13 teilweise geschnittene Ansichten bzw. Details von Gasgehäusen mit Drehschiebern einer anderen Bauart, die

Fig. 14 bis 16 im Schnitt verschiedene Stellungen von Drehschiebern für die in den Fig. 10 und 12 dargestellten Gasgehäuse, die

Fig. 17 eine Abart eines Drehschiebers der vorgenannten Art, die

Fig. 18 bis 20 eine weitere Ausführung einer erfindungsgemässen Einrichtung mit einem Kolbenschieber, dargestellt in einem Längsschnitt eines Gasgehäuses in drei verschiedenen Stellungen, und die

Fig. 21 ein Diagramm, das in vereinfachter Form den Hub des Kolbenschiebers in Abhängigkeit vom Betriebszustand des Motors zeigt.

Soweit in der folgenden Beschreibung Elemente in den verschiedenen Ausführungsformen gleiche Funktionen erfüllen, sind ihnen gleiche Bezugszahlen zugeordnet.

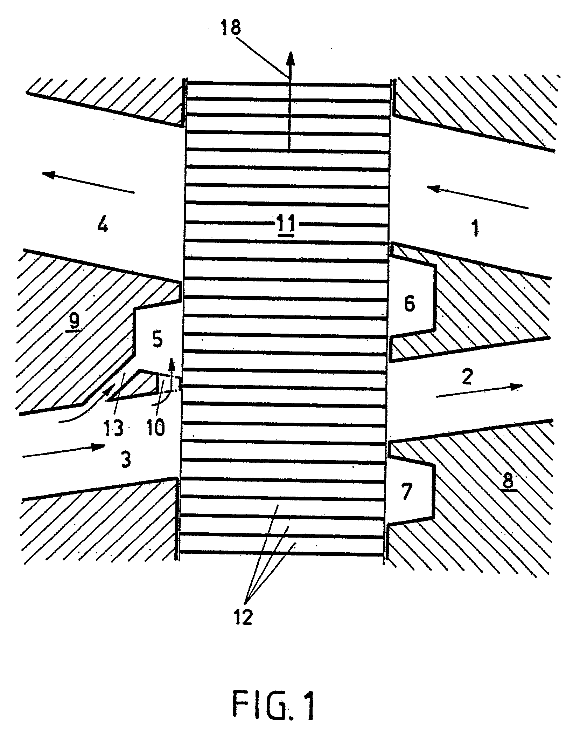

Die Fig. 1 zeigt eine Abwicklung eines Zylinderschnittes durch die halbe Höhe der Rotorzellen und der Haupt- und Hilfskanäle für einen Zyklus des Druckwellenladers. Unter einem Zyklus ist hier die Gesamtheit der aus Fig. 1 ersichtlichen Haupt- und Hilfskanäle zu verstehen, die für einen ordnungsgemäss ablaufenden Druckwellenprozess erforderlich sind. Im allgemeinen weisen die heute bekannten, praktisch brauchbaren Druckwellenlader zwei Zyklen auf, deren Kanäle jeweils über den halben Umfang des Gas- bzw. Luftgehäuses verteilt angeordnet sind.

Die vier Hauptkanäle eines solchen Zyklus sind in der Fig. 1 mit 1–4 bezeichnet, und zwar sind dies der Niederdruckluftkanal 1, durch den Luft von Atmosphärendruck einströmt, der Hochdruckluftkanal 2, durch den die verdichtete Ladeluft in die Motorzylinder strömt, der Hochdruckabgaskanal 3, durch den die aus dem Motor ausgestossenen Verbrennungsgase in die Rotorzellen 12 des Rotors 11 strömen und die darin vorhandene Niederdruckluft verdichten, sowie den Niederdruckabgaskanal 4, aus dem die in den Rotorzellen 12 entspannten Verbrennungsgase ins Freie auspuffen. Als Hilfskanäle sind vorhanden im Gasgehäuse 9 eine Gastasche 5, die einen Teil des Hochdruckabgases aufnimmt und, wie eingangs beschrieben, im Zusammenwirken mit einer Expansionstasche 6 die Niederdruckspülung verbessert, sowie eine Kompressionstasche 7 im Luftgehäuse 8 für die Vorkompression der Ladeluft bei tiefen Drehzahlen. Damit wird im Gegensatz zum Abgasturbolader auch im unteren Drehzahlbereich ein brauchbarer Ladedruck entwickelt.

Für die Speisung der Gastasche 5 kennt man, wie eingangs gesagt, die rein statische Druckanspeisung, die man durch einen an der Stirnseite des Gasgehäuses 9 vorgesehenen, flachen Gastaschenzuströmkanal 10 erhält, und die Totaldruckanspeisung, deren Steuerung Gegenstand der vorliegenden Erfindung ist. Zur letztgenannten Anspeisung dient ein vom Hochdruckabgaskanal 3 unter einem möglichst spitzen Winkel abzweigender Gastaschenzuströmkanal 13, wobei das gleichzeitige Vorhandensein des Kanals 10 in bestimmten Fällen vorteilhaft ist. Falls auf den Kanal 10 verzichtet wird, gilt die strichpunktiert gezeichnete Begrenzung der Kanäle.

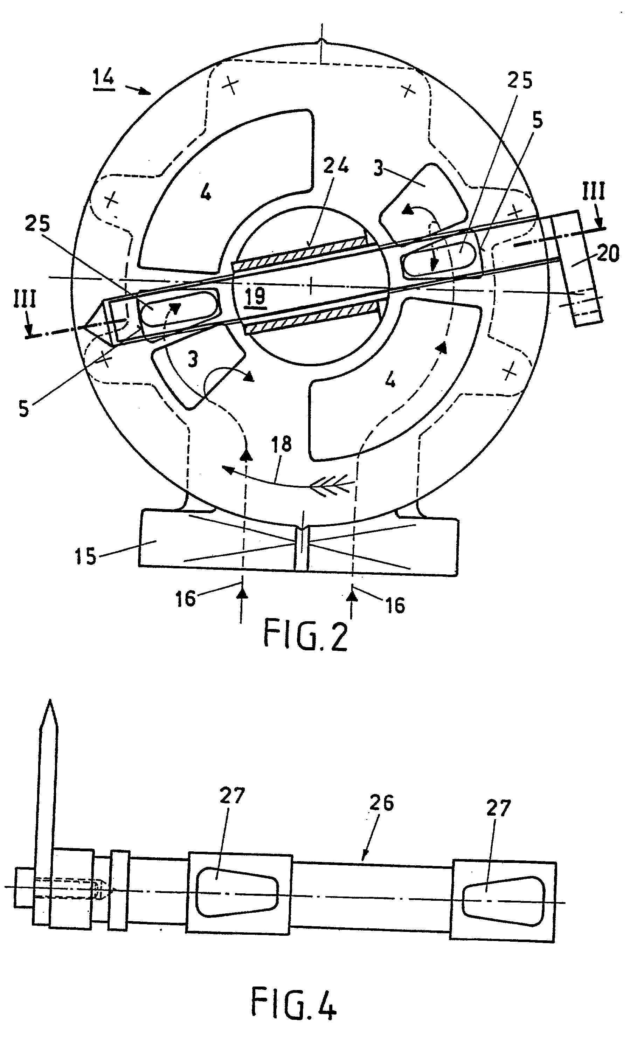

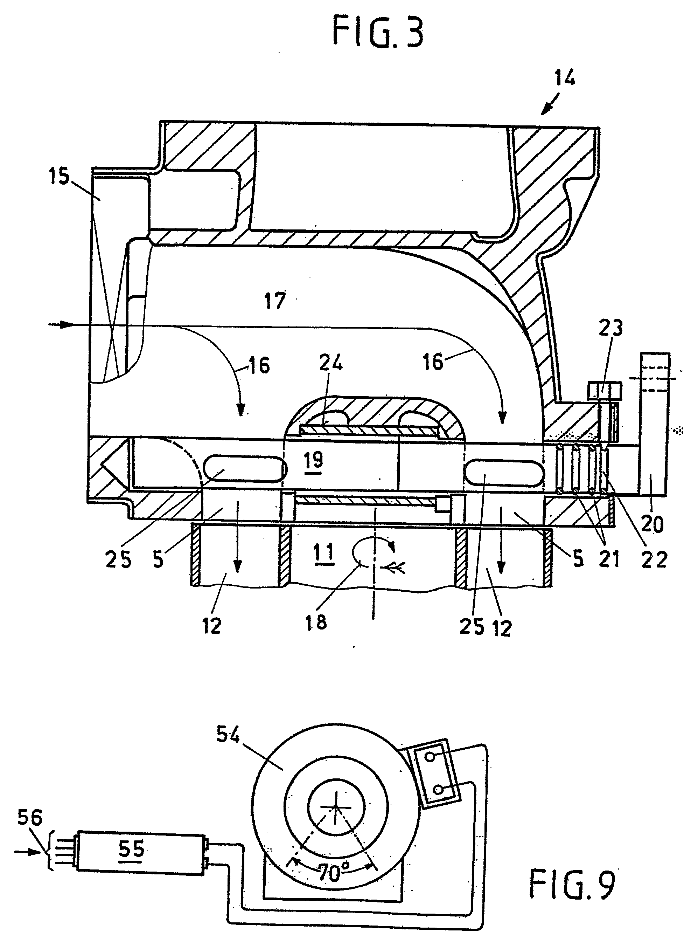

Die Fig. 2 und 3 zeigen von einer ersten Ausführungsform eines erfindungsgemässen Druckwellenladers eine Stirnansicht des Gasgehäuses 14 bzw. einen Schnitt durch dasselbe gemäss dem in Fig. 2 eingetragenen Schnittverlauf III–III. Wie auch bei den anderen, noch zu besprechenden Ausführungsformen sind den Haupt- und Hilfskanälen die bei Beschreibung der Fig. 1 eingeführten und erklärten Bezugszahlen zugeordnet. Für die anderen, körperlichen Elemente werden zwecks besserer Unterscheidung der einzelnen Bauarten voneinander jeweils andere Bezugszahlen eingeführt.

In den Fig. 2 und 3 bezeichnet 15 einen Flansch des Gasgehäuses, an dem die vom Motor kommende Abgasleitung angeschlossen wird. Der Abgasstrom ist durch die Strömungspfeile 16 symbolisiert. Das Abgas tritt in den für die beiden Zyklen gemeinsamen Abgasraum 17 ein und verteilt sich dort in die aus Fig. 2 ersichtlichen Hochdruckabgaskanäle 3. Der Drehrichtungspfeil 18 gibt den Drehsinn des Rotors 11 an, von dem ein Teil mit seinen Zellen 12 in Fig. 3 dargestellt ist. In dieser Richtung läuft auch der abgasseitige Teil des Druckwellenprozesses ab, indem zunächst in jedem Zyklus das Abgas in den Hochdruckabgaskanal 3 gelangt, von wo dann ein vom Betriebszustand abhängig gesteuerter Teilstrom in die Gastasche 5 abgezweigt wird. Das im Rotor 11 entspannte Abgas wird durch die Niederdruckluft in den Niederdruckabgaskanal 4 hinausgespült, von wo es durch einen aus den Fig. 2 und 3 nicht ersichtlichen Auspuffkanal, dessen Achse senkrecht zur Zeichenebene von Fig. 2 liegt, ins Freie austritt. Soweit bilden diese Elemente Bestandteile bekannter Druckwellenlader für die Aufladung von Fahrzeugmotoren.

Das erfindungswesentliche Element verkörpert im vorliegenden Falle ein Drehschieber 19 im Zusammenwirken mit einer unten beschriebenen Steuervorrichtung. Dieser Drehschieber ist an entgegengesetzten Seiten des Gehäuses mit im Hinblick auf die Erwärmung ausreichendem Spiel gelagert. Am rechten Ende, wo er einen Arm 20, z.B. zum Angriff einer zur erwähnten Steuervorrichtung gehörenden Stange eines Stellmotors aufweist, ist das Lager durch hitzebeständige Dichtringe abgedichtet und durch eine in eine Ringnut 22 eingreifende Schraube 23 axial gesichert. Der Übersichtlichkeit halber ist dieses Lager in Fig. 2 vereinfacht dargestellt, ebenso ist der Arm 20 in der Darstellung nach Fig. 3 gegenüber jener nach Fig. 2 um 90° gedreht gezeigt.

Der mittlere Teil des Drehschiebers 19 ist durch eine Wärmeschutzhülse 24 gegen Hitzeeinwirkung abgeschirmt. Diese Hülse verhindert auch das Eindringen von Abgas und Russpartikeln in den Nabenraum des Rotors und damit auch in die verschmutzungs- und wärmeempfindliche Rotorwälzlagerung.

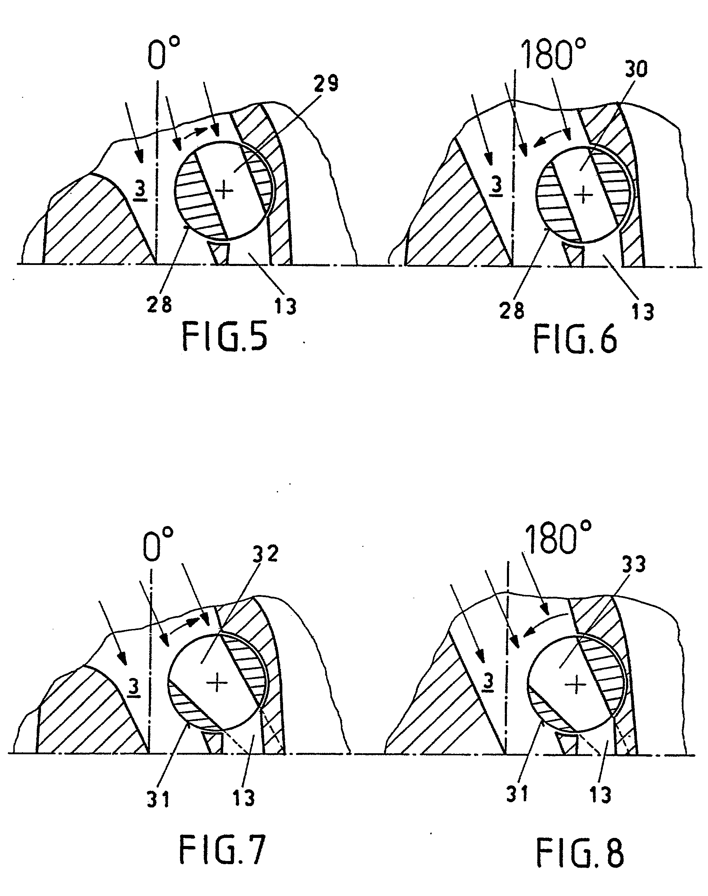

Der Drehschieber 19 durchsetzt das Gasgehäuse 14 auf einem Durchmesser, der etwa zwischen den beiden Austrittsquerschnitten des Hochdruckabgaskanals 3 und des Gastaschenzuströmkanals 13 der beiden, um 180° gegeneinander versetzten Zyklen liegt. Im Bereich der beiden Gastaschenzuströmkanäle 13 weist der Drehschieber Steuerkanäle 25 auf. Deren dem Rotor zugewandten Austrittsquerschnitte sind zwar kongruent dargestellt, praktisch kann aber die Form der Kanäle zwischen ihrem Ein- und Austritt verschieden sein, was für die in den Fig. 5 bis 8 dargestellten zwei Varianten der Steuerkanäle zutrifft. Dort sind die Kanalformen für den jeweils 1. und 2. Zyklus gezeigt, deren Ungleichheit bedingt ist durch die voneinander abweichende Form der zwei durch die Strömungspfeile 16 in Fig. 2 symbolisierten Hochdruckabgaskanäle, die vom Flansch 15 zu je einem der beiden Zyklen führen und verschiedene Längen aufweisen. Die Forderung nach gleichem Massendurchsatz für die beiden Zyklen führt bei der im Inneren unsymmetrischen Gestaltung des Gasgehäuses nach den Fig. 2 und 3 zu diesen unterschiedlichen Kanalformen, was im wesentlichen durch die voneinander abweichenden Strömungs- und Temperaturverhältnisse in den verschieden langen Hochdruckabgaskanälen 3 bedingt ist. Abweichend von der in den besprochenen Figuren dargestellten Bauform könnten die zwei Zyklen aber auch symmetrisch zu einem Flansch 15 liegen, so dass dann auch die zwei im Drehschieber vorgesehenen Steuerkanäle gleich gestaltet sein können. Für die vorliegende Beschreibung wurde aber als Ausführungsbeispiel einfachheitshalber das Gasgehäuse eines praktisch ausgeführten Druckwellenladers gewählt.

Die Steuerkanäle nach Fig. 2 zeigen im Querschnitt parallele Wände und halbkreisförmige Enden. Bei einer modifizierten, in Fig. 4 dargestellten und mit 26 bezeichneten Ausführungsform des Drehschiebers sind die Steuerkanäle 27 mit trapezartigem Querschnitt ausgeführt, der etwa dem Eintrittsquerschnitt des Gastaschenzuströmkanals vor dem Rotor entspricht. Dadurch wird der ganze Querschnitt des Gastaschenzuströmkanals für die Anspeisung ausgenützt.

Bei den zwei Varianten des Drehschiebers gemäss den Fig. 5 und 6 bzw. 7 und 8 sind, wie erwähnt, die Steuerkanäle für den 1. und den 2. Zyklus voneinander verschieden geformt. Dem jeweils 1. Zyklus ist der Winkel 0°, dem jeweils 2. Zyklus der Winkel 180° zugeordnet. Beim Drehschieber 28 nach den Fig. 5 und 6 sind die Kanalwände der Steuerkanäle 29 bzw. 30 parallel zueinander, beim Drehschieber 31 nach den Fig. 7 und 8 verengen sich die Steuerkanäle 32 bzw. 33 gegen die Gastasche düsenförmig.

Für das Zusammenwirken mit dem Motor muss die Steuerung des Drehschiebers in Abhängigkeit vom Betriebszustand des Motors bewirkt werden. Dafür stehen bewährte konventionelle Steuer- und Regeleinrichtungen aus dem Gebiet des Kraftmaschinenbaus zur Auswahl, deren Stell- und Regelbewegungen von Sensoren ausgelöst werden, die auf prozesstypische Grössen von Motor und Lader oder auch motortypische Grössen ansprechen.

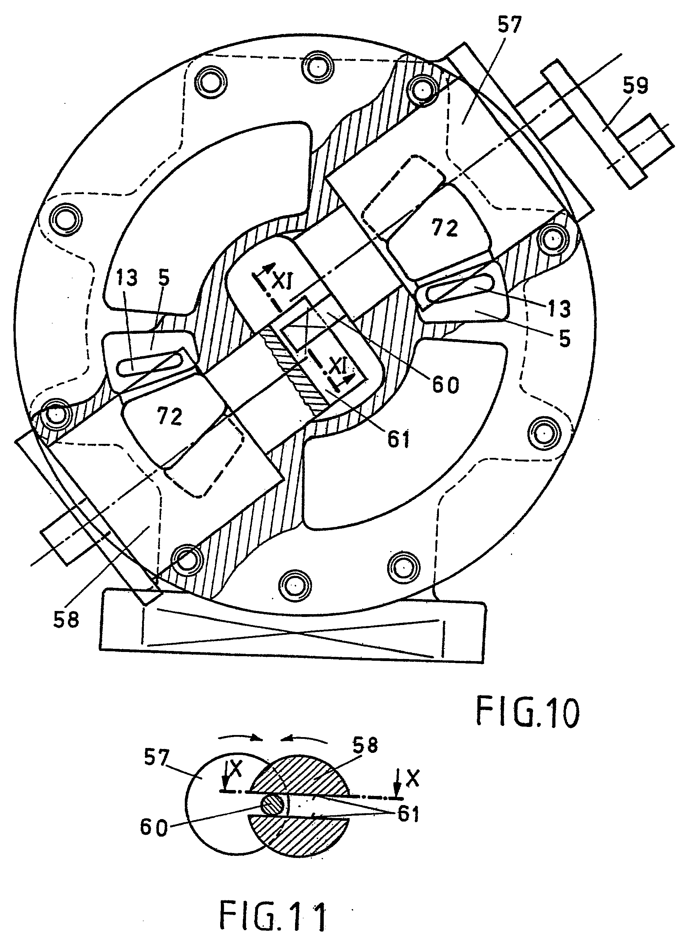

Eine Steuervorrichtung, die den Gastaschenzufluss mit geringem Aufwand in der gewünschten Weise steuert, ist der in Fig. 9 schematisch dargestellte Schrittmotor 54, der in Verbindung mit einer elektronischen Kennfeldsteuerung, analog einer kennfeldgesteuerten Zündung bei Ottomotoren, sich für die vorliegende Aufgabe ideal eignet. Der Anker eines solchen Schrittmotors kann an der freien Stirnseite des Drehschiebers direkt koaxial oder indirekt über ein Gestänge mit diesem gekuppelt sein. Wie abgebildet könnte der Schwenkwinkel beispielsweise 70° betragen. Ein zur Steuerung des Schrittmotors programmierter Prozessrechner 55 bekannter Bauart kann z.B. mit Eingängen für den Ladeluftdruck, die Ladelufttemperatur, die Hochdruckabgastemperatur und die Motordrehzahl ausgestattet sein. Die Impulse dieser Eingänge, deren Gesamtheit in Fig. 9 mit 56 bezeichnet ist, werden im Prozessrechner in Signale zur Steuerung des Schrittmotors 54 verarbeitet.

Für Start und Leerlauf ist dabei der Gastaschenzufluss voll geöffnet, wobei vermutlich auf das üblicherweise erforderliche automatische Startventil als Anlaufhilfe verzichtet werden kann. Das Druckverhältnis kann in Abhängigkeit vom maximal zulässigen Ladedruck programmiert werden, d.h., dass nicht in vereinfachender Weise auf konstantes Druckverhältnis über den ganzen Drehzahlbereich programmiert werden muss. Die Ladelufttemperatur lässt sich im Teillastbereich, wo der höchstzulässige Ladedruck nicht erreicht wird, durch Erhöhung des Druckverhältnisses steigern, was für das Regenerieren des Partikelfilters für die Russabscheidung vorteilhaft ist. Eine Höhenkompensation ist durch Absperren des Gastaschenzuflusses in vollem Umfang möglich. Und schliesslich kann bei Teillast durch Erhöhung der Rezirkulation der $NO_x$-Ausstoss reduziert werden.

Eine weitere Konzeption für die Steuerung des Gastaschenzuflusses wird im folgenden anhand der Fig. 10 bis 17 beschrieben.

Eine erste Variante dieser Konzeption geht in ihrem Aufbau aus den Fig. 10 und 11 hervor.

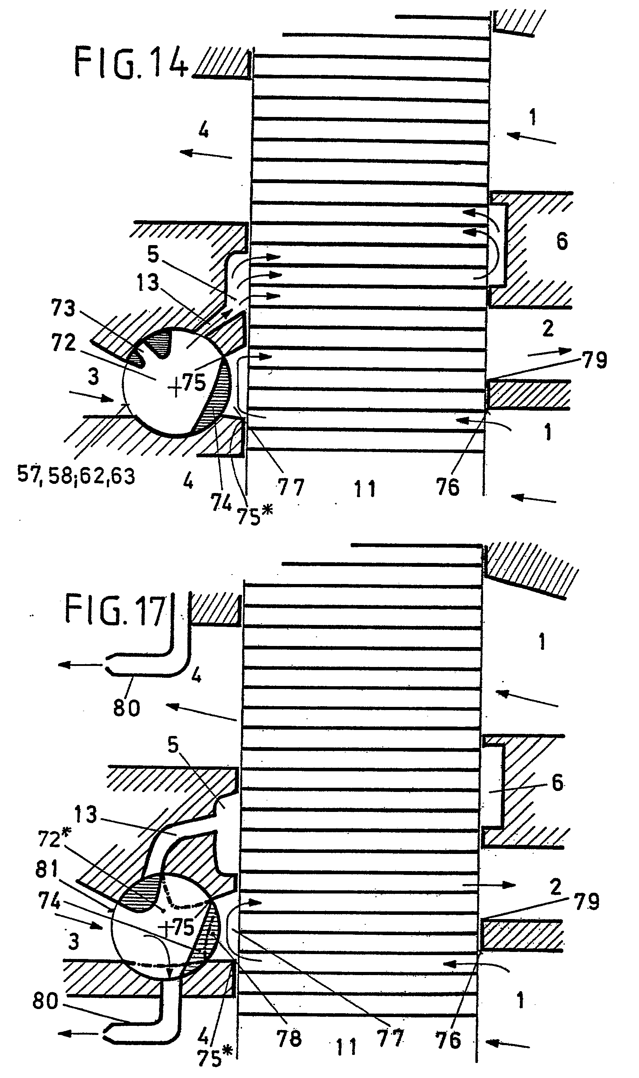

Wie bei der ersten Konzeption beruht die Steuerung des Gastaschenzuflusses auch hier auf dem Prinzip des Drehschiebers, wobei die steuernden Kanäle den Hochdruckabgaskanal und den Gastaschenzuströmkanal ebenfalls mehr oder weniger in einem vom Betriebszustand abhängigen Verhältnis zueinander zwischen "Voll offen" und "Geschlossen" drosseln können. Der Unterschied gegenüber der erstbeschriebenen Ausführung besteht darin, dass für jeden Zyklus je ein eigener Drehschieber 57 bzw. 58 vorgesehen ist, die aber zwangsläufig mechanisch gekoppelt sind, derart, dass bei Schwenken des einen, z.B. des mit 57 bezeichneten und mit einem Kurbelarm 59 versehenen, der andere, 58, gegensinnig zum ersten geschwenkt wird. Zur mechanischen Kopplung der beiden Drehschieber weist der erste Drehschieber 57 an seinem inneren Ende einen Führungszapfen 60 auf, der in einer am inneren Ende des zweiten Drehschiebers 58 vorgesehenen Führungsnut 61 gleitend geführt ist, wie aus dem in Fig. 11 gezeigten Schnitt gemäss dem Schnittverlauf XI–XI von Fig. 10 hervorgeht. Die gegensinnige Schwenkbewegung der beiden Drehschieber hat den Vorteil, dass die Steuerkanäle der Drehschieber, die auf den unten zu beschreibenden Fig. 14 bis 17 dargestellt sind, bezüglich eines Punktes der Rotorachse polarsymmetrisch sind. Sie brauchen also nicht, wie beim Drehschieber nach der ersten Konzeption, bei der die Steuerkanäle für die beiden Zyklen gleichsinnig geschwenkt werden, unterschiedlich gestaltet zu werden, um gleiche Strömungsverhältnisse an den beiden Zyklen zu erhalten.

In Fig. 10 ist der obere Teil des Drehschieberendes, das die Führungsnut 61 enthält, entsprechend dem in Fig. 11 eingetragenen Schnittverlauf X–X geschnitten dargestellt.

Die auf den Kurbelarm 59 ausgeübte Schwenkbewegung zur gesteuerten Aufteilung des Hochdruckabgasstromes wird in gleicher Weise wie bei der ersten Konzeption mit bekannten Stelleinrichtungen und Sensoren von den gleichen prozesstypischen Grössen abgeleitet.

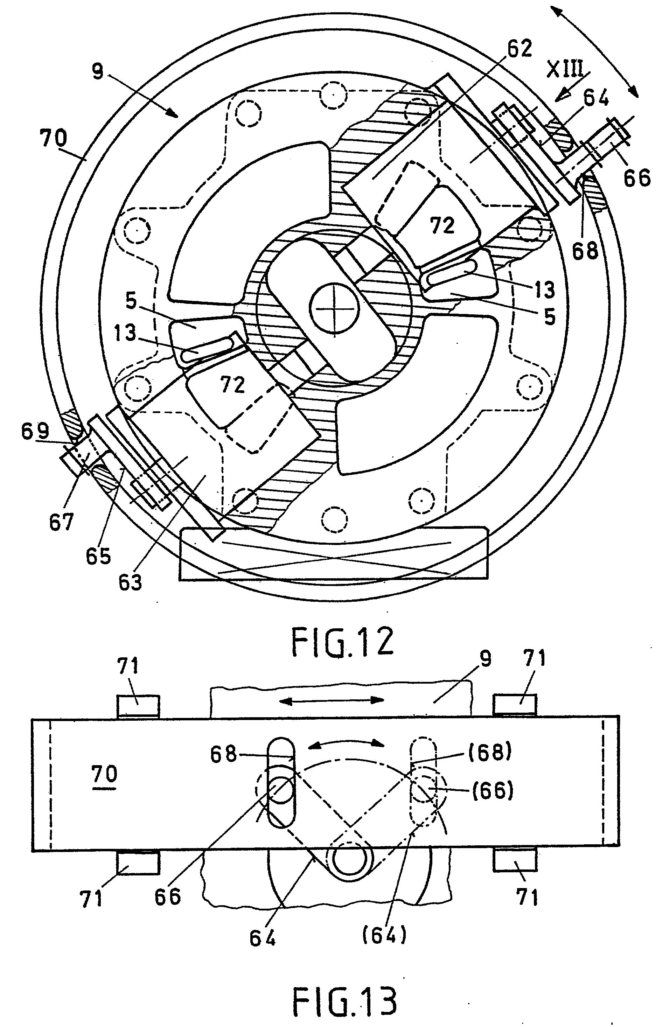

Dasselbe gilt auch für die in den Fig. 12 und 13 dargestellte Variante der zweiten Konzeption. Diese unterscheidet sich von jener nach den Fig. 10 und 11 lediglich durch eine andere zwangsläufige mechanische Kopplung der beiden Drehschieber 62 und 63. Sie weisen je einen Kurbelarm 64 bzw. 65 auf, deren Kurbelzapfen 66 bzw. 67 in zur Rotorachse parallelen Führungsschlitzen 68 bzw. 69 eines das Gasgehäuse 9 umgebenden Koppelringes 70 geführt sind. Die Führung des Koppelringes ist in Fig. 13 durch Führungsklötze 71 schematisch angedeutet.

Am längeren Kurbelzapfen 66, der über die äussere Begrenzung des Koppelringes 70 hinausreicht, greift eine Stange der oben beschriebenen Steuervorrichtung an und schwenkt bei einer Stellbewegung den Drehschieber 62, wobei gleichzeitig der Koppelring 70 vom Kurbelzapfen 66 verdreht wird, so dass der Kurbelarm 65 und damit der Drehschieber 63 für den zweiten Zyklus um den gleichen Winkel wie der Kurbelarm 64 bzw. der Drehschieber 62 des ersten Zyklus geschwenkt wird. Wie bei der ersten Variante nach den Fig. 10 und 11 werden die Drehschieber gegensinnig geschwenkt, so dass die Steuerkanäle und die Gastaschenzuströmkanäle der beiden Zyklen gleich gestaltet werden können. Aus Fig. 13 gehen die beiden Endlagen des Kurbelarmes 64 hervor, wobei sich die in Klammer gesetzten Bezugszahlen auf die gedachte rechte Endlage, die strichpunktiert dargestellt ist, beziehen.

Diese Kopplung der Drehschieber eignet sich auch für Druckwellenlader mit mehr als zwei Zyklen, z.B. für eine solche mit drei Zyklen, die künftig praktische Bedeutung erlangen könnten.

Die in den Fig. 14–17 im Querschnitt dargestellten Steuerkanäle in den Drehschiebern der zwei vorerwähnten Varianten sollen in den folgenden Betriebsbereichen einen einwandfreien Druckwellenprozess ermöglichen:
– Im Leerlauf, beim Start, wobei auf ein herkömmliches Startventil verzichtet werden kann, sowie für den Notbetrieb, der im Falle einer Havarie die Heimkehr des Fahrzeuges aus eigener Kraft ermöglichen soll;
– den Betrieb bei Teil- und Vollast im unteren Drehzahlbereich sowie
– den Betrieb bei Teil- und Vollast im oberen Drehzahlbereich.

Diese Forderungen werden bei der Ausführung nach den Fig. 14–16 durch einen gegenüber der Ausführung nach der ersten Konzeption zusätzlichen Kanal erzielt. Dabei kann es sich um einen der paarweise vorgesehenen Drehschieber nach einer der Fig. 10 oder 12 oder einer sinngemäss gleichen Bauart, aber ebenso um einen Drehschieber nach Fig. 4 handeln. Von einem Hauptsteuerkanal 72, dessen Querschnitt im wesentlichen gleich jenem des Hochdruckabgaskanals 3 ist, zweigt ein engerer Nebensteuerkanal 73 ab. Der Zylinderkörper dieses Drehschiebers überdeckt hier aber sowohl den Querschnitt des Hochdruckabgaskanals 3 als auch die drehschieberseitige Öffnung des Gastaschenzuströmkanals 13, wogegen bei der erstbeschriebenen Konzeption der Zylinder des Drehschiebers 19 den Hochdruckabgaskanal bei allen Betriebszuständen nur teilweise überdeckt. Auch bleibt bei der letztgenannten Konzeption die Steuerkantengeometrie des Hochdruckabgaskanals, d.h., deren Lage bezüglich des Hochdruckluftkanals 2 und gegebenenfalls auch einer Kompressionstasche 7, ungeändert, während es einem Drehschieberpaar 57+58 und 62+63 gestattet, die Öffnungskante des Hochdruckabgaskanals 3 entsprechend dem jeweiligen Betriebszustand innerhalb des Austrittsquerschnittes des Kanals 3 zu verschieben. Diese Öffnungskante ist die mit 75 bezeichnete Kante des halbmondförmigen Restquerschnittes 74 des Drehschiebers im Bereich der Steuerkanäle.

Einer der in den Fig. 10 und 12 dargestellten Drehschieber 57, 58, 62 und 63 ist in den Fig. 14, 15 und 16 in seiner Stellung für verschiedene Betriebsbereiche gezeigt. Fig. 14 zeigt die Stellung für Leerlauf des Motors sowie für Notbetrieb, der eine Heimkehr des Fahrzeuges aus eigener Kraft ermöglicht. Der halbmondförmige Restquerschnitt 74 sperrt dabei den Hochdruckabgaskanal 3 vollständig ab, der Gastaschenzuströmkanal ist offen, so dass, von Leckagen abgesehen, das Abgas nur über die Gastasche 5 in den Rotor gelangt. Das Abgas aus dem Kanal 3 kann also nicht in den Hochdruckluftkanal 2 hinein wirken. Eine leichte Überdeckung des Kanals 3 durch den Niederdruckluftkanal 1, d.h., dass die Schliesskante 76 des Kanals 1 von einer Rotorzelle, in Rotordrehrichtung gesehen, später erreicht wird als die feste Öffnungskante 75* des Kanals 3, ermöglicht, dass soviel Niederdruckluft aus dem Kanal 1 über eine Rotorzelle und eine Hilfstasche 77, die durch den vom Drehschieber abgeschlossenen Mündungsbereich des Kanals 3 gebildet wird, in den Kanal 2 überströmt, dass der Motor gestartet werden kann und im Leerlauf dreht. Falls der Rotor durch eine Havarie blockiert ist, genügt die über den Kanal 1, die Rotorzellen und die Tasche 77 angesaugte Luft zum erwähnten Notbetrieb des Fahrzeugs.

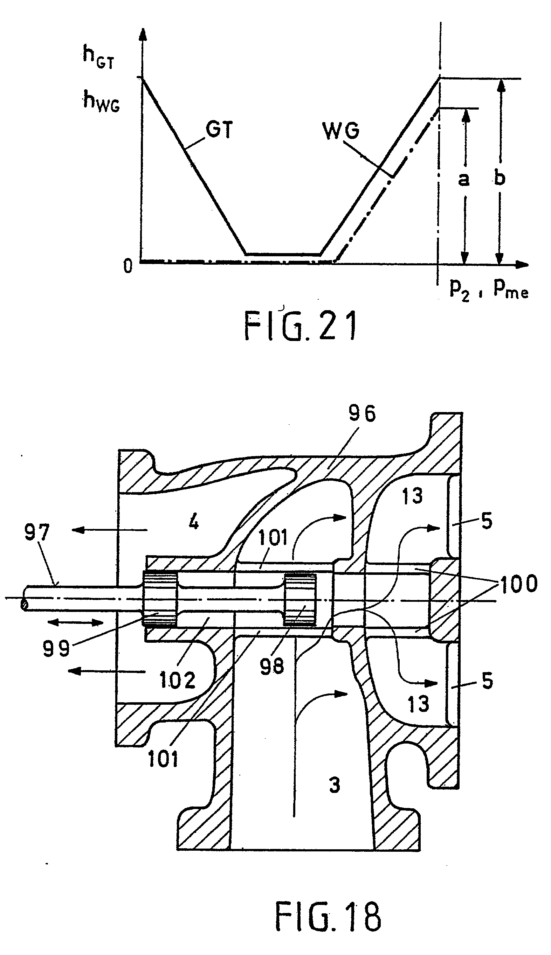

Damit die Hilfstasche 77 gebildet werden kann, verzichtet man darauf, den Drehschieber so nahe wie möglich an der Rotorstirnfläche zu plazieren, obwohl dies bei Vollast wegen der unvermeidlichen Leckage günstiger wäre. Eine Verbesserung in dieser Hinsicht erhält man durch eine aus Fig. 17 ersichtliche, strichliert gezeichnete Ausnehmung 78 an der Rückseite des halbmondförmigen Restquerschnitts 74. Der Drehschieber kann damit noch näher am Rotor angeordnet werden, wobei die Hilfstasche 77 noch immer ausreichend gross ist.

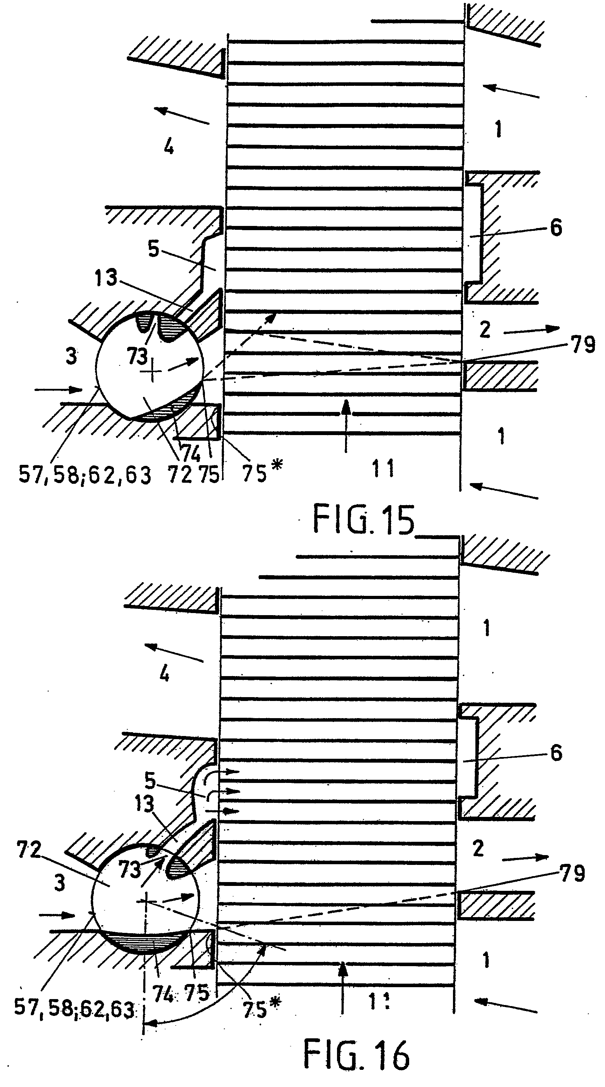

Die Fig. 15 zeigt den Drehschieber in einer Zwischenstellung mit zu etwa zwei Dritteln freigegebenem Kanal 3 und geschlossenem Zuströmkanal 13 für die Gastasche 5. Dies ist die Stellung für den Teil- und Vollastbetrieb bei niedrigen Drehzahlen. Die Schwenkung des Drehschiebers in diese Lage wird nach Erreichen eines niedrigen Ladedrucks ausgelöst, dessen Grösse im wesentlichen der Ansprechschwelle eines bei konventionellen Druckwellenladern verwendeten Startventils entspricht. Der Hauptsteuerkanal 72 lenkt in dieser Stellung das Abgas unter einem steilen Winkel gegen die Rotorzellenwände, was besonders für freilaufende Druckwellenlader ohne zwangsläufigen Antrieb erwünscht ist. Sodann ergibt die geringe gegenseitige Versetzung der Öffnungskanten 75 und 79 des Hochdruckabgaskanals 3 bzw. des Hochdruckluftkanals 2 eine günstige Abstimmung des hochdruckseitigen Druckwellenprozesses bei niedrigen Drehzahlen, wobei auf eine Kompressionstasche 7 vor dem Kanal 2 verzichtet werden kann. Da der Gastaschenzuströmkanal 13 dabei geschlossen ist, steht die gesamte Abgasenergie für die Verdichtung zur Verfügung.

In Fig. 16 ist die Endstellung des Drehschiebers bei Teil- und Vollast im Bereich hoher Drehzahlen wiedergegeben. Dabei sind der Hauptsteuerkanal 72 und der Gastaschenzuströmkanal 13 ganz offen. Der Verstellbereich des Drehschiebers liegt zwischen der Stellung nach Fig. 15 und dieser Endstellung. Die beste Abstimmung des hochdruckseitigen Druckwellenprozesses bleibt im wesentlichen erhalten, ebenso wird eine Rezirkulation von Abgas in die Ladeluftleitung weitgehend vermieden. Eine Ladedruckbegrenzung erfolgt durch Ableiten von überschüssigem Abgas in die Gastasche 5, was die Niederdruckspülung unterstützt.

Die Fig. 17 zeigt eine Variante der vorgängig beschriebenen Steuerung, wobei zur Unterstützung der Niederdruckspülung ein Teil des Hochdruckabgases aus dem Kanal 3 über eine Ejektordüse 80 in den Niederdruckabgaskanal 4 abgezweigt wird. Der zugehörige Drehschieber 81 besitzt nur einen Steuerkanal 72*, wobei die mit Vollinien gezeichnete Stellung jener des Drehschiebers in der Fig. 14 entspricht, d.h., es handelt sich um den Leerlauf- und Notbetrieb. Die strichpunktiert gezeichnete Lage entspricht jener nach Fig. 16, also der Endstellung bei Teil- und Vollast im oberen Drehzahlbereich. Der Kanal 3 und der Zuströmkanal 13 sind also ganz offen. Strichpunktiert eingezeichnet ist auch die Ausnehmung 78, die gegebenenfalls zur Vergrösserung der Hilfstasche 77 vorgesehen sein kann, wenn der Drehschieber so weit wie möglich gegen den Rotor hin plaziert ist.

Für die Verstellung der Drehschieber können die gleichen Mittel wie bei der erstbeschriebenen Konzeption verwendet werden. Zwecks bestmöglicher Anpassung des Laders an das vom Motor geforderte Betriebsverhalten ist hier ebenfalls eine Kennfeldsteuerung die fortschrittlichste Lösung. Als Funktion der Motordrehzahl oder, bei Freilaufdruckwellenladern, der Rotordrehzahl und des effektiven Mitteldruckes, repräsentiert durch den Regelstangenweg der Einspritzpumpe, werden die günstigsten Stellungen der Drehschieber kennfeldmässig in einer elektronischen Steuereinheit gespeichert, wobei auch andere für den Motorbetrieb wichtige Daten gespeichert werden können, z.B. die vom Zustand, d.h., Verschmutzungsgrad, eines Partikelfilters abhängigen Grössen.

Eine dritte, in den Fig. 18 bis 20 dargestellte Konzeption der Steuerung des Gastaschenzuflusses verwendet als Steuerorgan einen Kolbenschieber 97, der in einem Gasgehäuse 96 der Hoch- und Niederdruckabgaskanal 3 bzw. 4 durchsetzt und bis in den Anfang der zwei für die beiden Zyklen vorgesehenen Gastaschenzuströmkanäle 13 der Gastaschen 5 hinein verschoben werden kann. Der Kolbenschieber 97 weist einen Gastaschen- und einen Wastegatekolben 98 bzw. 99 auf, von denen der erste das Öffnen und Schliessen des Gastaschenzuflusses und der zweite dasselbe für das Wastegate besorgt. Die beiden Kolben sind, wenn sie sich ausserhalb ihrer Schliessstellungen befinden, zwischen Führungsrippen 100 und 101 geführt, die sich quer zu den Gastaschenzuströmkanälen 13 bzw. quer durch den Hochdruckabgaskanal 3 hindurch erstrecken.

Die Fig. 18 zeigt die Stellung des Kolbenschiebers 97 für den Leerlauf- und Notbetrieb. Der Gastaschenkolben 98 gibt die Zuströmung zu den Gastaschen frei, der Wastegatekanal 102, der bei zu hohem Ladedruck überschüssiges Hochdruckabgas in den Niederdruckabgaskanal abbläst, ist vom Wastegatekolben 99 abgesperrt.

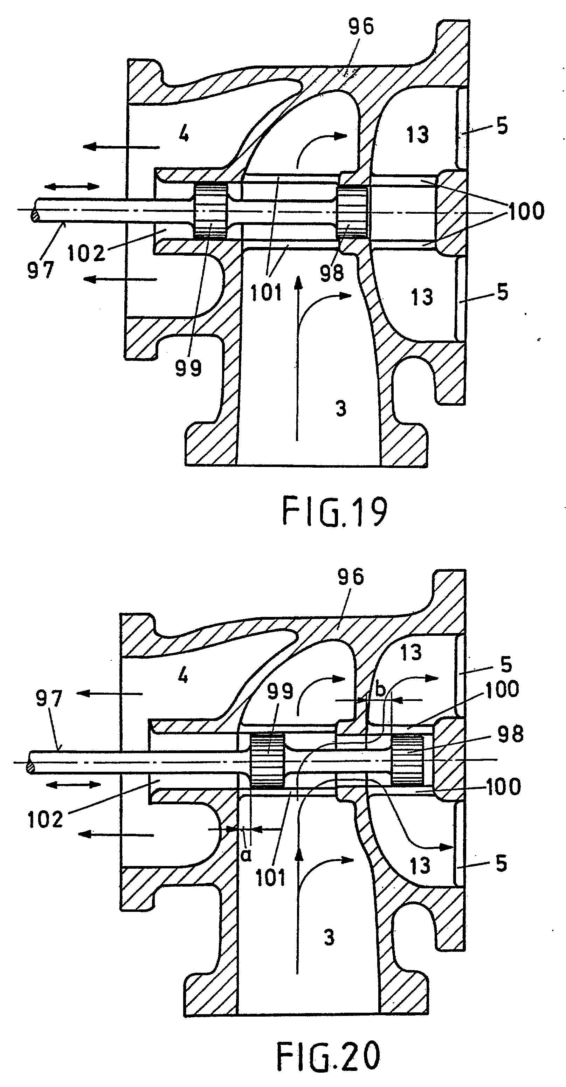

Bei Teil- und unterer Vollast sind, wie Fig. 19 zeigt, sowohl der Wastegatekanal 102 als auch die Gastaschenzuströmkanäle 13 abgesperrt. Das Hochdruckabgas steht zur Gänze für die Verdichtungsarbeit zur Verfügung.

Bei oberer Vollast mit überschüssigem Angebot an Hochdruckabgas sind Wastegate und Gastaschenzuströmkanäle offen, siehe Fig. 20, wobei für die Öffnungshübe a und b gilt: a < b.

Bei dieser und der zweiten Konzeption läuft der Druckwellenprozess infolge gleich gestalteter Kanäle der beiden Zyklen symmetrisch ab. Bei der Ausführung mit Kolbenschieber haben die beiden Gastaschen 5 auch einem gemeinsamen Zuströmkanal 13.

Die Steuerung des Kolbenschiebers kann durch Sensoren und Stellmittel bekannter Bauart in analoger Weise wie bei den zwei erstbeschriebenen Konzeptionen bewerkstelligt werden. Die Fig. 21 stellt die Abhängigkeit der Öffnungshübe $h_{GT}$ und $h_{WG}$ der Kanäle 13 und 102 dar, wobei die Steuerung in Abhängigkeit vom Ladedruck $P_2$ und dem mittleren effektiven Druck $p_{me}$ des Motors erfolgt.

**Patentansprüche**

1. Druckwellenlader für einen Verbrennungsmotor mit einer Einrichtung zur Steuerung des Hochdruckabgasstromes, mit einem oder mehreren Zyklen und einem Gasgehäuse sowie einem Luftgehäuse und einem zwischen diesen Gehäusen eingeschlossenen Rotorgehäuse mit einem Zellenrotor, wobei im Gasgehäuse (9) und im Luftgehäuse (8) Haupt- und Hilfskanäle (3, 4, 5 bzw. 1, 2, 6, 7) für die Zu- und Abfuhr von Hochdruck- und Niederdrucksabgas bzw. von Niederdruck- und Hochdruckluft vorgesehen sind wobei die Hauptkanäle aus einem Niederdruckluftkanal (1) und einem Hochdruckluftkanal (2) im Luftgehäuse (8) sowie aus einem Hochdruckabgaskanal (3) und einem Niederdruckabgaskanal (4) im Gasgehäuse (9) bestehen und einer der Hilfskanäle eine Gastasche (5) ist, die an der dem Zellenrotor (11) zugewandten Stirnseite des Gasgehäuses (9) vorgesehen ist, welche Gastasche (5) hinter dem Hochdruckabgaskanal (3), in Drehrichtung des Rotors (11) gesehen, liegt und über einen Gastaschenzuströmkanal (13) mit dem Hochdruckabgaskanal (3) verbunden ist, dadurch gekennzeichnet, dass die Einrichtung zur Steuerung des Hochdruckabgasstromes ein Steuerorgan (19; 26; 28; 31; 57+58; 62+63; 81; 97) aufweist, das von einem Stellmotor steuerbar ist, der durch Signalmittel aktivierbar ist, die auf für den Druckwellenprozess und den Motorarbeitsprozess typische Grössen ansprechen, und dass das genannte Steuerorgan so verstellbar ist, dass es sowohl den Teilstrom durch den Gastaschenzuströmkanal als auch den Hauptstrom durch den Hochdruckabgaskanal (3) mindestens teilweise absperren kann.

2. Druckwellenlader nach Anspruch 1, dadurch gekennzeichnet, dass das Steuerorgan ein einstückiger Drehschieber (19; 26; 28; 31) ist, dessen Steuerkanäle (25; 27; 29; 30 bzw. 32, 33) zueinander parallele oder sich düsenförmig verengende Begrenzungswände aufweisen.

3. Druckwellenlader nach Anspruch 1, mit zwei Zyklen, dadurch gekennzeichnet, dass für jeden Zyklus ein eigener Drehschieber (57, 58 bzw. 62, 63, 81) vorgesehen ist, dass diese Drehschieber durch mechanische Mittel so miteinander gekoppelt sind, dass sie durch eine Steuerbewegung in bezug auf ihren Zyklus gleichsinnig geschwenkt werden, und dass die Drehschieber derart in den Hochdruckabgaskanälen (3) angeordnet und ihre Steuerkanäle (72, 73; 72*), so ausgebildet sind, dass sie den Durchflussquerschnitt des Hochdruckabgaskanals (3) und des Gastaschenzuströmkanals (13) stufenlos zwischen "Voll offen" und "Ganz geschlossen" ändern können.

4. Druckwellenlader nach Anspruch 3, dadurch gekennzeichnet, dass die Mittel zur mechanischen Kopplung der beiden Drehschieber (57, 58) aus einer Führungsnut (61) am inneren Ende des einen Drehschiebers (58) und aus einem in dieser Führungsnut (61) gleitbar gelagerten Führungszapfen (60) am inneren Ende des anderen Drehschiebers (57) bestehen, und dass der Führungszapfen (60) exzentrisch zur Achse des zugehörigen Drehschiebers (57) liegt.

5. Druckwellenlader nach Anspruch 3, dadurch gekennzeichnet, dass die Mittel zur mechanischen Kopplung der beiden Drehschieber (62, 63) einen Koppelring (70) mit zur Rotorachse parallelen Führungsschlitzen (68, 69) sowie je einen Kurbelarm (64, 65) mit einem Kurbelzapfen (66 bzw. 67) an den Drehschiebern aufweisen, wobei die Kurbelzapfen (66, 67) in den Führungsschlitzen (68, 69) geführt sind und der eine (66) der Kurbelzapfen dazu bestimmt ist, mit einem Stellmotor (54) mechanisch gekoppelt zu werden, und dass Führungsklötze (71) zur Führung des Koppelringes (70) vorgesehen sind.

6. Druckwellenlader nach Anspruch 3, dadurch gekennzeichnet, dass die Drehschieber (57, 58; 62, 63) einen Hauptsteuerkanal (72) für die Änderung des Durchflussquerschnitts der Hochdruckabgaskanäle (3) und einen Nebensteuerkanal (73) für die Änderung des Durchflussquerschnitts der Gastaschenzuströmkanäle (13) aufweisen, und dass die Drehschieber im Bereich der Hochdruckabgaskanäle (3) einen halbmondförmigen Restquerschnitt (74) aufweisen, dessen eine Kante als verstellbare Öffnungskante (75) für den Hochdruckabgaskanal (3) fungiert.

7. Druckwellenlader nach Anspruch 3, dadurch gekennzeichnet, dass der Drehschieber (81) einen einzigen Steuerkanal (72*) aufweist, der dazu bestimmt ist, sowohl mit dem Hochdruckabgaskanal (3) als auch mit dem Gastaschenzuflusskanal (13) zu kommunizieren, und dass eine Ejektordüse (80) vorhanden ist, die aus dem Hochdruckabgaskanal (3) in den vorangehenden Niederdruckabgaskanal (4) führt und durch den halbmondförmigen Restquerschnitt (74) des Drehschiebers (81) absperrbar ist.

8. Druckwellenlader nach Anspruch 3, dadurch gekennzeichnet, dass der halbmondförmige Restquerschnitt (74) an seiner Aussenseite eine Ausnehmung (78) zur Bildung einer Hilfstasche (77) aufweist (Fig. 19).

9. Druckwellenlader nach Anspruch 1, mit einem zur Rotorachse koaxialen, in den Niederdruckabgaskanal (4) einmündenden Wastegatekanal (102), dadurch gekennzeichnet, dass die Gastaschen (5) aller Zyklen einen gemeinsamen Gastaschenzuströmkanal (13) aufweisen, und dass das Steuerorgan als Kolbenschieber (97) ausgebildet ist, der das Gasgehäuse (96) koaxial zum Rotor (11) durchsetzt und einen Gastaschenkolben (98) und einen Wastegatekolben (99) aufweist, die zum stufenlosen Ändern der Zuflussquerschnitte zu den Gastaschen (5) und zum Wastegatekanal (102) bestimmt sind.

10. Druckwellenlader nach Anspruch 1, dadurch gekennzeichnet, dass der Stellmotor ein von einem Prozessrechner (55) kennfeldgesteuerter Schrittmotor (54) ist, der direkt koaxial mit dem Steuerorgan (19; 26; 28; 31; 57+58; 62+63; 81; 97) gekuppelt ist.

11. Druckwellenlader nach Anspruch 10, dadurch gekennzeichnet, dass die Kennfeldsteuerung des Schrittmotors so ausgelegt ist, dass sie durch ein vom Hochdruckluftdruck ($p_2$) und vom mittleren effektiven Druck ($p_{me}$) der Motorzylinder abgeleitetes Signal das Steuerorgan so steuert, dass die Öffnung der Gastaschenzuströmkanäle (13) vom untersten Leerlaufbereich ausgehend mit zunehmender Last bis auf Null verringert wird, während in diesem Lastintervall der Wastegatekanal geschlossen bleibt, worauf in einem anschliessenden Teillastbereich und unteren Vollastbereich die Gastaschenzuströmkanäle (13) und der Wastegatekanal geschlossen bleiben und in einem oberen Vollastbereich sowohl die Gastaschenzuströmkanäle (13) als auch der Wastegatekanal offen sind.

## Claims

1. Pressure wave supercharger for an internal combustion engine with a device for controlling the high pressure exhaust gas flow, having one or more cycles and gas and air casings and a rotor casing with a cell rotor enclosed between these two casings, in which main and auxiliary ports (3, 4, 5 and 1, 2, 6, 7) are provided for the supply and removal of high pressure and low pressure exhaust gas and of low pressure and high pressure air in the gas casing (9) and air casing (8), respectively, in which the main ports consist of a low pressure air port (1) and a high pressure air port (2) in the air casing (8) and of a high pressure exhaust gas port (3) and a low pressure exhaust gas port (4) in the gas casing (9) and in which one of the auxiliary ports is a gas pocket (5) which is provided on the end surface of the gas casing (9) facing towards the cell rotor (11), which gas pocket (5) is located behind the high pressure exhaust gas port (3), viewed in the direction of rotation of the rotor (11), and is connected to the high pressure exhaust gas port (3) by means of a gas pocket inlet port (13), characterised in that the device for controlling the high pressure exhaust gas flow has a control element (19; 26; 28; 31; 57+58; 62+63; 81; 97) which can be controlled by a servomotor which can be activated by signal means which respond to parameters typical of the pressure wave process and the engine operating process, and that the control element mentioned can be adjusted in such a way that it can at least partially shut off both the partial flow through the gas pocket inlet port and the main flow through th high pressure exhaust gas port (3).

2. Pressure wave supercharger according to Claim 1, characterised in that the control element is a single-piece rotary valve (19; 26; 28; 31) whose control ports (25; 27; 29; 30 and 32, 33) are parallel to one another or have converging boundary walls of nozzle shape.

3. Pressure wave supercharger according to Claim 1, having two cycles, characterised in that each cycle is provided with its own rotary valve (57, 58 and 62, 63, 81), that these rotary valves are coupled together by mechanical means in such a way that they are pivoted by a control movement in the same direction relative to their cycle, and that the rotary valves are arranged in the high pressure exhaust gas ports in such a way and their control ports (72, 73; 72*) are so designed that they can change the flow cross-section of the high pressure exhaust gas port (3) and the gas pocket inlet port (13) steplessly between "fully open" and "completely closed".

4. Pressure wave supercharger according to Claim 3, characterised in that the means for the mechanical coupling of the two rotary valves (57, 58) consist of a guide groove (61) at the inner end of one rotary valve (58) and of a guide trunnion (60) at the inner end of the other rotary valve (57), supported so that it can slide in this guide groove (61) and that the guide trunnion (60) is located eccentrically to the axis of the associated rotary valve (57).

5. Pressure wave supercharger according to Claim 3, characterised in that the means for the mechanical coupling of the two rotary valves (62, 63) have a coupling ring (70) having guide slots (68, 69) parallel to the rotor axis and one crank arm each (64, 65) with a crank trunnion (66 and 67) on the rotary valves, the crank trunnions (66, 67) being guided in the guide slots (68, 69) and the purpose of one (66) of the crank trunnions being to provide mechanical coupling to a servomotor (54), and that guide blocks (71) are provided for guiding the coupling ring (70).

6. Pressure wave supercharger according to Claim 3, characterised in that the rotary valves (57, 58; 62, 63) have a main control port (72) for the change to flow cross-section of the high pressure exhaust gas ports (3) and an auxiliary control port (73) for the change to the flow cross-section of the gas pocket inlet ports (13), and that the rotary valves have a half-moon shaped residual cross-section (74) in the region of the high pressure exhaust gas ports (3), one edge of which acts as the variable opening edge (75) for the high pressure exhaust gas port (3).

7. Pressure wave supercharger according to Claim 3, characterised in that the rotary valve (81) has a single control port (72*) whose purpose is to communicate with both the high pressure exhaust gas port (3) and the gas pocket inlet port (13), and that there is an ejector nozzle (80), which leads from the high pressure exhaust gas port (3) into the previous low pressure exhaust gas port (4) and can be shut off by the half-moon shaped residual cross-section (74) of the rotary valve (81).

8. Pressure wave supercharger according to Claim 3, characterised in that the half-moon shaped residual cross-section (74) has a recess (78) for forming an auxiliary pocket (77) on its outer side (Fig. 19).

9. Pressure wave supercharger according to Claim 1, having a wastegate port (102) coaxial with the rotor axis and emerging into the low pressure exhaust gas port (4), characterised in that the gas pockets (5) of all the cycles have a common gas pocket inlet port (13), and that the control element is designed as a piston valve (97), which penetrates the gas casing (96) coaxial to the rotor (11) and has a gas pocket piston (98) and wastgate piston (99) the purpose of which is to steplessly change the inlet cross-sections to the gas pockets (5) and to the wastegate port (102).

10. Pressure wave supercharger according to Claim 1, characterised in that the servomotor is a step motor (54), controlled as a function of a characteristic diagram by an in-process computer (55), which step motor is directly connected coaxially to the control element (19; 26; 28; 31; 57+58; 62+63; 81; 97).

11. Pressure wave supercharger according to Claim 10, characterised in that the characteristic diagram control system for the step motor is designed in such a way that it controls the control element by means of a signal derived from the high pressure air pressure ($p_2$) and from the mean effective pressure ($p_{me}$) of the engine cylinder in such a way that, starting at the lowest idling range, the gas pocket inlet ports (13) opening is reduced, with increasing load until it is zero whereas during this load interval, the wastegate port remains closed; after this, in a subsequent part-load range and the lower full-load range, the gas pocket inlet ports (13) and the wastegate port remain closed and, in an upper full-load range, both the gas pocket inlet ports (13) and the wastegate port are open.

**Revendications**

1. Turbocompresseur à ondes de pression pour un moteur à combustion interne, avec un dispositif de réglage du courant des gaz d'échappement à haute pression, avec un ou plusieurs cycles et un corps à gaz ainsi qu'un corps à air et un corps de rotor logé entre ces deux corps et comportant un rotor à cellules, dans lequel il est prévu dans le corps à gaz (9) et dans le corps à air (8) des canaux principaux et auxiliaires (3, 4, 5 respectivement 1, 2, 6, 7) pour l'arrivée et l'évacuation des gaz d'échappement à haute pression et des gaz d'échappement à basse pression respectivement de l'air à haute pression et de l'air à basse pression, où les canaux principaux se composent d'un canal d'air à basse pression (1) et d'un canal d'air à haute pression (2) dans le corps à air (8) ainsi que d'un canal des gaz d'échappement à haute pression (3) et d'un canal des gaz d'echappement à basse pression (4) dans le corps à gaz (9) et où un des canaux auxiliaires est une poche à gaz (5) qui est prévue dans la face frontale du corps à gaz (9) qui est tournée vers le rotor à cellules (11), laquelle poche à gaz (5) se trouve après le canal des gaz d'échappement à haute pression (3) en regardant dans le sens de rotation du rotor et est raccordée au canal des gaz d'échappement à haute pression (3) par un canal (13) d'admission de la poche à gaz, caractérisé en ce que le dispositif de réglage du courant des gaz d'échappement à haute pression présente un organe de réglage (19; 26; 28; 31; 57+58; 62+63; 81; 97) qui peut être commandé par un moteur de réglage qui peut être actionné par des moyens de signaux, lesquels réagissent à des grandeurs typiques du processus des ondes de pression et du processus du moteur, et en ce que ledit organe de réglage est déplaçable de telle façon qu'il puisse obturer, au moins partiellement, aussi bien le courant partiel dans le canal d'admission de la poche à gaz que le courant principal dans le canal des gaz d'échappement à haute pression (3).

2. Turbocompresseur à ondes de pression suivant la revendication 1, caractérisé en ce que l'organe de réglage est un tiroir rotatif d'une seule pièce (19; 26; 28; 31), dont les canaux de commande (25; 27; 29; 30 respectivement 32, 33) présentent des parois de limitation parallèles l'une à l'autre ou se rapprochant en forme de tuyères.

3. Turbocompresseur à ondes de pression suivant la revendication 1, avec deux cycles, caractérisé en ce qu'il est prévu un tiroir rotatif propre (57, 58 respectivement 62, 63, 81) pour chaque cycle, en ce que ces tiroirs rotatifs sont couplés l'un à l'autre par des moyens mécaniques de telle manière qu'ils sont mis en rotation dans le même sens par rapport à leur cycle au moyen d'un mouvement de commande, et en ce que les tiroirs rotatifs sont disposés de telle façon dans des canaux des gaz d'échappement à haute pression (3) et leurs canaux de commande (72, 73; 72*) sont formés de telle façon qu'ils peuvent modifier de manière continue entre une position "entièrement ouvert" et une position "complètement fermé" la section de passage du canal des gaz d'échappement à haute pression (3) et celle du canal (13) d'admission de la poche à gaz.

4. Turbocompresseur à ondes de pression suivant la revendication 3, caractérisé en ce que les moyens de couplage mécanique des deux tiroirs rotatifs (57, 58) se composent d'une rainure de guidage (61) ménagée à l'extrémité intérieure de l'un des tiroirs rotatifs (58) et d'un tourillon de guidage (60) coulissant dans cette rainure de guidage (61) prévu à l'extrémité intérieure de l'autre tiroir rotatif (57), et en ce que le tourillon de guidage (60) est disposé excentriquement par rapport à l'axe du tiroir rotatif (57) auquel il appartient.

5. Turbocompresseur à ondes de pression suivant la revendication 3, caractérisé en ce que les moyens de couplage mécanique des deux tiroirs rotatifs (62, 63) présentent une bague de couplage (70) avec des fentes de guidage (68, 69) parallèles à l'axe du rotor ainsi qu'une manivelle (64, 65) avec un maneton (66 respectivement 67) à chaque tiroir rotatif, les manetons (66, 67) étant guidés dans les fentes de guidage (68, 69) et un (66) des manetons étant destiné à être couplé mécaniquement à un moteur de réglage (54), et en ce qu'il est prévu des tasseaux de guidage (71) pour le guidage de la bague de couplage (70).

vant la revendication 3, caractérisé en ce que les tiroirs rotatifs (57, 58; 62, 63) présentent un canal de commande principal (72) pour modifier la section de passage des canaux de gaz d'échappement à haute pression (3) et un canal de commande secondaire (73) pour modifier la section de passage des canaux (13) d'admission des poches à gaz, et en ce que les tiroirs rotatifs présentent dans la région des canaux des gaz d'échappement à haute pression (3) une section résiduelle (74) en forme de demi-lune dont une arête joue le rôle d'arête d'ouverture (75) réglable pour le canal des gaz d'échappement à haute pression (3).

7. Turbocompresseur à ondes de pression suivant la revendication 3, caractérisé en ce que le tiroir rotatif (81) présente un seul canal de commande (72*), qui est destiné à communiquer aussi bien avec le canal des gaz d'échappement à haute pression (3) qu'avec le canal (13) d'admission de la poche à gaz, et en ce qu'il est prévu une tuyère d'éjection (80) qui conduit du canal des gaz d'échappement à haute pression (3) au canal des gaz d'échappement à basse pression (4) et que pour être obturée par la section résiduelle (74) en forme de demi-lune du tiroir rotatif (81).

8. Turbocompresseur à ondes de pression suivant la revendication 3, caractérisé en ce que la section résiduelle (74) en forme de demi-lune présente à son côté extérieur une cavité (78) pour former une poche auxiliaire (77).

9. Turbocompresseur à ondes de pression suivant la revendication 1, avec un canal de wastegate (102) coaxial à l'axe du rotor et débouchant dans le canal des gaz d'échappement à basse pression (4), caractérisé en ce que les poches à gaz (5) de tous les cycles présentent un canal (13) d'admission des poches à gaz commun, et en ce que l'organe de commande a la forme d'un registre à piston (97), qui traverse le corps à gaz (96) coaxialement au rotor (11) et présente un piston de poche à gaz (98) et un piston de wastegate (99) qui sont destinés à faire varier de manière continue la section de passage vers les poches à gaz (5) et vers le canal de wastegate (102).

10. Turbocompresseur à ondes de pression suivant la revendication 1, caractérisé en ce que le moteur de réglage est un moteur pas à pas (54) commandé par un diagramme caractéristique au moyen d'un calculateur de processus (55), lequel moteur est directement couplé coaxialement avec l'organe de réglage (19; 26; 28; 31; 57+58; 62+63; 81; 97).

11. Turbocompresseur à ondes de pression suivant la revendication 10, caractérisé en ce que la commande du moteur pas à pas par un diagramme caractéristique est constituée de telle façon qu'elle commande l'organe de réglage au moyen d'un signal dérivé de la pression d'admission ($p_2$) de l'air à haute pression et de la pression moyenne effective ($p_{me}$) des cylindres de moteur, de telle sorte que l'ouverture des canaux (13) d'admission des poches à gaz est réduite jusqu'à zéro en partant du plus bas domaine de ralenti à mesure que la charge augmente, tandis que dans cet intervalle de charge, le canal de wastegate reste fermé, et qu'ensuite dans un domaine à charge partielle voisin et dans le domaine inférieur de la pleine charge, les canaux d'admission (13) des poches à gaz et le canal de wastegate restent fermés et que dans un domaine supérieur de la pleine charge, aussi bien les canaux d'admission (13) des poches à gaz que le canal de wastegate sont ouverts.

FIG. 1

FIG.2

FIG.4

# FIG.3

# FIG.9

FIG.5

FIG.6

FIG.7

FIG.8

FIG.10

FIG.11

FIG.12

FIG.13

FIG.14

FIG.17

FIG. 15

FIG. 16

FIG.21

FIG.18

FIG.19

FIG.20